# EUROPÄISCHE PATENTSCHRIFT

(11) **EP 4 455 075 B1**
(45) Veröffentlichungstag und Bekanntmachung des Hinweises auf die Patenterteilung: **15.10.2025**
(21) Anmeldenummer: 24167981.0
(22) Anmeldetag: 02.04.2024
(51) Int. Cl.: B67C 3/22, B65B 55/02, B65B 55/10, B29C 49/36, B29C 49/42, B29C 49/58

(54) **VORRICHTUNG ZUM VERTEILEN VON FLUID IN BEHÄLTER UND ANLAGE SOWIE VERFAHREN ZUM BEHANDELN VON BEHÄLTERN**
DEVICE FOR DISTRIBUTING FLUID INTO CONTAINERS AND SYSTEM AND METHOD FOR TREATING CONTAINERS
DISPOSITIF DE DISTRIBUTION DE FLUIDE DANS DES RÉCIPIENTS ET INSTALLATION AINSI QUE PROCÉDÉ DE TRAITEMENT DE RÉCIPIENTS

(30) Priorität: 20.04.2023 DE 102023110017
(43) Veröffentlichungstag der Anmeldung: 30.10.2024
(73) Patentinhaber: KHS GmbH, 44143 Dortmund (DE)
(72) Erfinder: Emrich, Jonas, 44143 Dortmund (DE); Baumgartner, Klaus, 44143 Dortmund (DE); Leyendecker, Jan, 44143 Dortmund (DE)

(56) Entgegenhaltungen:
- EP-A1- 2 604 295
- EP-A1- 2 803 629
- US-A1- 2013 248 047

## Beschreibung

Die Erfindung betrifft eine Vorrichtung zum Verteilen von Fluid in Behälter, eine Anlage zum Behandeln von Behältern und ein Verfahren zum Behandeln von Behältern. Bei der Herstellung und/oder Befüllung von Behältern, insbesondere von Kunststoffbehältern, in denen Lebensmittel oder Getränke gelagert werden sollen, werden die Behälter verschiedenen Behandlungen unterzogen, um die Behälter zum Beispiel zu sterilisieren. Dazu können zum Beispiel Flüssigkeiten oder Gase in die Behälter eingeleitet werden. Um ein Fluid in die Behälter einzuleiten, werden Vorrichtungen zum Verteilen von Fluid in die Behälter verwendet. Zum Einstellen der Behandlungszeit der Behälter kann der Zustrom des Fluids gesteuert werden. Um eine Kondensation von gasförmigen Fluiden zu vermeiden, ist ein konstanter Volumenstrom für die Zuführung des Fluids günstig.

Dazu ist zum Beispiel aus EP 2604295 A1 bekannt, bei Betriebsstörungen der Behandlungsanlage das Fluid über einen Bypass abzuleiten und nicht in die Behälter gelangen zu lassen. Der Fluidzustrom kann bei Betriebsstörungen konstant gehalten werden. Allerdings ist diese Anlage komplex aufgebaut und bedarf einer komplexen Steuerung.

Weiter ist aus US 2013/248047 A1 eine Vorrichtung mit den technischen Merkmalen des Oberbegriffs des Anspruchs 1, und zwar mit einem rotierenden Flüssigkeitsspender bekannt, der aus einem festen Element mit einem bogenförmigen Fenster und einem rotierenden Element mit mehreren Flüssigkeitsauslassöffnungen besteht. Innerhalb des bogenförmigen Fensters befindet sich eine Behandlungszone, die von einem festen Startpunkt bis zu einem Endpunkt reicht und so die Abgabedauer der Flüssigkeit und somit die Behandlungsdauer der Behälter bestimmt. Die anfängliche Winkelposition des bogenförmigen Fensters kann manuell verändert werden, sodass die Abgabedauer der Flüssigkeit in Abhängigkeit vom Format der Behälter einstellbar ist. Die Winkelposition ist jedoch komplex fixiert.

Aufgabe der Erfindung ist es, eine Vorrichtung zum Verteilen von Fluid in Behälter für eine Anlage zum Behandeln von Behältern, die kostengünstig und einfach aufgebaut ist, und ein entsprechendes Verfahren zum Behandeln von Behältern bereitzustellen.

Die Aufgabe wird gelöst durch die Merkmale der unabhängigen Ansprüche. Vorteilhafte Weiterbildungen sind Gegenstand der abhängigen Ansprüche sowie der folgenden Beschreibung.

Die erfindungsgemäße Vorrichtung zum Verteilen von Fluid in Behälter umfasst einen Rotor, ein Fluidbegrenzungselement und einen Stator mit mindestens einer Fluideinlassöffnung, wobei der Stator und der Rotor eine mit der mindestens einen Fluideinlassöffnung fluidverbundene Kammer begrenzen, wobei der Rotor eine Vielzahl von Fluidauslassöffnungen zum Verteilen von Fluid in Behälter aufweist und mit den Fluidauslassöffnungen um eine Drehachse und relativ zum Fluidbegrenzungselement drehbar gelagert ist, wobei die Fluidauslassöffnungen ausgebildet sind, durch die Drehung um die Drehachse abwechselnd einen Transportbereich, in dem die Fluidauslassöffnungen mit Behältern fluidverbunden sind, und einen Totwinkelbereich, in dem die Fluidauslassöffnungen mit einem Umgebungsbereich der Vorrichtung fluidverbunden sind, zu durchlaufen, wobei das Fluidbegrenzungselement in der Kammer angeordnet ist und die Fluidauslassöffnungen in einem Überdeckungsbereich zumindest teilweise bedeckt und die Fluidauslassöffnungen in einem Auslassbereich, der sich in Umfangsrichtung zumindest teilweise um die Drehachse erstreckt, freilässt, wobei die Kammer zumindest im Auslassbereich mit den Fluidauslassöffnungen fluidverbunden ist. Weiter ist vorgesehen, dass das Fluidbegrenzungselement zumindest zwischen einer ersten Position und einer zweiten Position beweglich angeordnet ist, wobei der Auslassbereich in der ersten Position vollständig innerhalb des Transportbereichs angeordnet ist und in der zweiten Position teilweise in dem Totwinkelbereich angeordnet ist.

Mit der Erfindung wird damit eine Vorrichtung zum Verteilen von Fluid in Behälter bereitgestellt, mit der gleichzeitig ein konstanter Volumenstrom bereitgestellt und eine Steuerung der Behandlungszeit durchgeführt werden kann. Dazu bedeckt das Fluidbegrenzungselement in der Kammer die Fluidauslassöffnungen in dem Überdeckungsbereich zumindest teilweise, sodass in dem Überdeckungsbereich lediglich ein begrenzter oder gar kein Fluidzustrom in die Fluidauslassöffnungen erfolgt. Die Bedeckung muss daher nicht zwingend dichtend ausgebildet sein, sondern kann den Durchlass einer geringen Menge von Fluid in die Fluidauslassöffnungen im Überdeckungsbereich erlauben. Lediglich im Auslassbereich werden die Fluidauslassöffnungen von dem Fluidbegrenzungselement freigelassen. Die Winkelposition des Auslassbereichs um die Drehachse bestimmt damit, an welchen Winkelpositionen um die Drehachse die Fluidauslassöffnungen mit der Kammer fluidverbunden werden. Dabei können die Fluidauslassöffnungen in Umfangsrichtung um die Drehachse verteilt am Rotor angeordnet sein. Im Auslassbereich kann daher ein Fluidzustrom von der Fluideinlassöffnung durch die Kammer in die Fluidauslassöffnungen erfolgen. Das Fluidbegrenzungselement dreht sich nicht mit dem Rotor um die Drehachse. Daher werden die Fluidauslassöffnungen durch die Drehung des Rotors abwechselnd durch den Überdeckungsbereich und den Auslassbereich bewegt. In der ersten Position ist der Auslassbereich vollständig innerhalb des Transportbereichs angeordnet. D. h., dass die Fluidauslassöffnungen, die den Auslassbereich des Fluidbegrenzungselements passieren, mit Behältern fluidverbunden sind. Daher definieren die Erstreckungslänge des Auslassbereichs in Bewegungsrichtung der Fluidauslassöffnungen und die Geschwindigkeit, mit der die Fluidauslassöffnungen den Auslassbereich in der ersten Position passieren, die Behandlungszeit der Behälter. Das Fluidbegrenzungselement kann weiter in eine zweite Position bewegt werden, in der der Auslassbereich teilweise im Totwinkelbereich angeordnet ist. Wenn der Auslassbereich in der zweiten Position teilweise im Totwinkelbereich angeordnet ist, befindet sich ein anderer Teil des Auslassbereichs weiterhin im Transportbereich. D. h., während die Fluidauslassöffnungen den Auslassbereich durchlaufen wechseln sie von dem Transportbereich in den Totwinkelbereich. Beim Übergang von dem Transportbereich in den Totwinkelbereich erfolgt eine Trennung der Fluidauslassöffnungen von den vorher fluidverbundenen Behältern bzw. erfolgt beim Übergang der Fluidauslassöffnungen von dem Totwinkelbereich in den Transportbereich eine Fluidverbindung zwischen den Fluidauslassöffnungen und Behältern. Die Behandlungszeit wird damit verkürzt, da die Erstreckungslänge des Transportbereichs in den Auslassbereich kürzer als die Gesamterstreckungslänge des Auslassbereichs ist. Damit definiert der Überlapp zwischen dem Transportbereich und dem Auslassbereich mit der Geschwindigkeit, mit der sich die Behälter durch den Transportbereich bewegen, die Behandlungszeit. In den Überlappungsbereich zwischen dem Auslassbereich und dem Totwinkelbereich wird das Fluid durch die Fluidauslassöffnungen weiterhin ausgeblasen. Dies kann zum Beispiel in die Umgebung der Vorrichtung erfolgen, beispielsweise in einen Isolatorraum. Weiter kann der Auslassbereich in einer dritten Position des Fluidbegrenzungselements auch vollständig im Totwinkelbereich angeordnet sein. In diesem Fall erfolgt keine Behandlung der Behälter, sondern das gesamte Fluid kann durch die Fluidauslassöffnungen in die Umgebung ausgeblasen werden. In allen Fällen kann der Volumenstrom, der durch die Fluideinlassöffnung in die Kammer eingeleitet wird, konstant bleiben. Insbesondere können zusätzliche thermodynamische Größen, z. B. die Temperatur, der Druck, die Konzentration oder die Warmhaltung des Systems konstant gehalten werden. Vorzugsweise ist die Winkelposition des Fluidbegrenzungselements beliebig einstellbar, d. h. das Fluidbegrenzungselements kann jede Position zwischen der ersten Position und der dritten Position annehmen. Weiter kann auch die erste Position innerhalb des Transportbereichs beliebig gewählt werden. Genauso kann die dritte Position beliebig innerhalb des Totwinkelbereichs ausgewählt werden. Mit der Vorrichtung kann damit sowohl eine Einstellung der Behandlungszeit erfolgen als auch ein konstanter Volumenstrom in der Kammer bereitgestellt werden. Dies vereinfacht den Aufbau der Vorrichtung und verringert die Anzahl der Teile, die benötigt werden, da keine Einzelventilsteuerung für die Fluidauslassöffnungen zum Einstellen Behandlungszeit benötigt wird. Die Vorrichtung ist damit kostengünstig und einfach aufgebaut.

Behälter im Sinne der Erfindung können beispielsweise Flaschen, insbesondere Getränkeflaschen, oder Vorformlinge zum (Streck-)Blasen von Flaschen sein. Die Behälter können z. B. aus einem Kunststoffmaterial, insbesondere PET, bestehen.

Vorzugsweise erstrecken sich der Transportbereich und der Totwinkelbereich, insbesondere kreisbogenförmig, in Umfangsrichtung um die Drehachse. Gemeinsam können sie die Drehachse vorzugsweise vollständig umschließen.

Die Vorrichtung kann zum Beispiel mit einer rotativen Transportvorrichtung verbunden sein oder eine solche Transportvorrichtung umfassen, die an einer Übernahmeposition Behälter aufnimmt und an einem Abgabeposition Behälter abgibt. Der Transportbereich kann sich von der Übernahmeposition in Drehrichtung bis zur Abgabeposition erstrecken, wobei im Transportbereich Behälter mit den Fluidauslassöffnungen fluidverbunden sind. Der Totwinkelbereich kann sich von der Abgabeposition in Drehrichtung bis zum Übernahmepunkt erstrecken, wobei im Totwinkelbereich keine Behälter mit den Fluidauslässen verbunden sind. Die Fluidauslassöffnungen können dann stattdessen mit dem Umgebungsbereich der Vorrichtung fluidverbunden sein, insbesondere mit einem Isolatorraum, in dem sich die Vorrichtung befindet. Die rotative Transportvorrichtung kann um die Drehachse, um die der Rotor drehbar gelagert ist, gedreht werden.

Gemäß einem Beispiel kann die Vorrichtung eine Drehdurchführung für Sterilisationsmedien, z. B. H₂O₂, oder Behälterfüllungen, z. B. flüssige Lebensmittel oder Getränke, sein.

In einem Ausführungsbeispiel kann sich eine Wand der Kammer mit dem Rotor um die Drehachse mitdrehen. Die Fluidauslassöffnungen können dann auch an der Wand angeordnet sein. Weiter können die Fluidauslassöffnungen in Umfangsrichtung um die Drehachse an der Wand verteilt angeordnet sein.

Das Fluidbegrenzungselement kann mindestens ein Material aufweisen, das aus der folgenden Gruppe ausgewählt ist: Kunststoff, z. B. PET, PEEK, oder Metall, z. B. Stahl, Edelstahl oder beschichteter (Edel-)Stahl.

Gemäß einem Beispiel kann das Fluidbegrenzungselement zum Verschieben des gesamten Auslassbereichs in Umfangsrichtung um die Drehachse ausgebildet sein. D. h., dass in diesem Beispiel die Erstreckungslänge des Auslassbereichs trotz der Verschiebung konstant bleibt.

In einem anderen Beispiel kann jedoch vorgesehen sein, dass die Erstreckungslänge des Auslassbereichs geändert werden kann. Dann können zum Beispiel die Übergangspunkte zwischen dem Auslassbereich und Überdeckungsbereich unabhängig voneinander verschoben werden. Mit der Änderung der Erstreckungslänge des Auslassbereichs wird dann gleichzeitig die Erstreckungslänge des Überdeckungsbereichs geändert. Wenn der Auslassbereich verkleinert wird, wird in diesem Beispiel der Überdeckungsbereich vergrößert und umgekehrt.

Gemäß einem Ausführungsbeispiel kann das Fluidbegrenzungselement scheibenförmig und der Rotor als drehbarer Boden der Kammer ausgebildet sein, wobei das Fluidbegrenzungselement eine Durchgangsöffnung aufweist, die den Auslassbereich freilässt.

Die Fluidauslassöffnungen können nach unten ausgerichtet sein. Fluid aus der Kammer kann dann automatisch durch die Fluidauslassöffnungen strömen, sobald sie im Auslassbereich angeordnet sind, selbst wenn kein Fluidzustrom durch die Fluideinlassöffnung erfolgt. Die Vorrichtung weist dann die Eigenschaft der Selbstentleerbarkeit auf. Dies ist insbesondere bei Betriebsstörungen vorteilhaft, wobei dann der Ausgangsbereich in die dritte Position verschoben werden kann, um das Fluid in die Umgebung der Vorrichtung abzuleiten und die Behälter vor einer Beaufschlagung mit dem Fluid zu sichern.

Der Auslassbereich ist zum Beispiel durch eine Durchgangsöffnung in dem Fluidbegrenzungselement definiert, wobei sich die Durchgangsöffnung von der Kammer durch das Fluidbegrenzungselement zu den Fluidauslassöffnungen erstreckt. Die Durchgangsöffnung bewegt sich beim Verstellen der Position des Fluidbegrenzungselements mit den Fluidbegrenzungselement mit, sodass dadurch die Änderung der Position des Auslassbereichs erfolgt. Die Durchlassöffnung kann zum Beispiel als Fenster oder als Unterbrechung in dem Fluidbegrenzungselement ausgebildet sein.

Einem weiteren Beispiel gemäß kann das Fluidbegrenzungselement um die Drehachse drehbar sein. Durch eine Drehung des Fluidbegrenzungselements wird damit der Auslassbereich in Umfangsrichtung um die Drehachse verstellt. Damit kann sich der Auslassbereich parallel zu der Bewegungsrichtung der Fluidauslassöffnungen bewegen, sodass die Verstellung der Position des Auslassbereichs auf einfache Weise durchgeführt werden kann.

Erfindungsgemäß weist die Vorrichtung einen Antrieb außerhalb der Kammer auf, der mit einer Welle, die sich durch die Fluideinlassöffnung erstreckt, mit dem Fluidbegrenzungselement drehfest gekoppelt ist.

Die Kopplung zwischen der Welle und dem Fluidbegrenzungselement kann zum Beispiel an mindestens drei Positionen an dem Fluidbegrenzungselement erfolgen.

Weiter kann das Fluidbegrenzungselement zum Beispiel schwimmend in der Kammer gelagert sein. Das Fluidbegrenzungselement ist dann nicht befestigt, so dass insbesondere bei thermischer Ausdehnung Spannungen zwischen dem Fluidbegrenzungselement und der Welle vermieden werden.

Weiter kann das Fluidbegrenzungselement dazu beispielsweise Nuten aufweisen, die sich radial zur Drehachse erstrecken, wobei die Welle eine Kopplungseinrichtung aufweisen kann. Die Kopplungseinrichtung kann, z. B. Arme, aufweisen, die mit Fingern parallel zur Drehachse in die Nuten eingreifen und in Umfangsrichtung einen Formschluss bilden. Es können vorzugsweise mindestens drei Finger und Nuten vorgesehen sein.

Wenn die Kopplungseinrichtung und das Fluidbegrenzungselement unterschiedlich thermisch ausgedehnt werden, kann eine Relativbewegung zwischen den Fingern und den Nuten stattfinden, sodass die Kopplungspositionen zwischen der Welle und dem Fluidbegrenzungselement in radialer Richtung verstellt werden.

Gemäß einem weiteren Beispiel kann die Vorrichtung mindestens ein Federelement zum Vorspannen des Fluidbegrenzungselements gegen den Rotor aufweisen, wobei das Federelement, vorzugsweise unter einer thermischen Beanspruchung von 160 °C, selbstnivellierend sein kann.

Weiter kann das Fluidbegrenzungselement in einem Ausführungsbeispiel insbesondere zweistückig ausgebildet sein. Alternativ ist es möglich, dass das Fluidbegrenzungselement einstückig oder aus mehr als zwei Teilen ausgebildet ist.

Weiter kann durch die Fluideinlassöffnung ein konstanter Fluidzustrom in die Kammer eingeleitet werden.

Die Erfindung betrifft weiter eine Anlage oder einen Anlagenteil zum Behandeln von Behältern mit einem Fluid, umfassend mindestens eine Vorrichtung nach der vorangegangenen Beschreibung und mindestens ein Gehäuse, das einen Innenraum umgibt, wobei zumindest der Rotor in dem Innenraum angeordnet ist.

Der Transportbereich und der Totwinkelbereich sind dann ebenfalls in dem Gehäuse angeordnet. D. h., dass die Behälter innerhalb des Gehäuses durch den Transportbereich transportiert werden.

Weiter können sich in dem Gehäuse weitere Vorrichtungen befinden, die die Behälter dem Transportbereich zuführen oder dem Transportbereich entnehmen können.

Gemäß einem Beispiel kann sich der Stator mit der Fluideinlassöffnung von außen durch das Gehäuse in den Innenraum erstrecken. Dazu kann der Stator zum Beispiel an einer Decke des Gehäuses angeordnet sein und sich durch die Decke des Gehäuses in den Innenraum erstrecken.

Einem Beispiel gemäß können die Fluidauslassöffnungen jeweils über mindestens eine außerhalb des Rotors angeordnete Leitung mit mindestens einem Behälteranschluss zum Verbinden mit einer Mündung eines Behälters fluidverbunden sein.

Weiter kann der Innenraum zum Beispiel einen Isolatorraum aufweisen, in dem der mindestens eine Behälteranschluss angeordnet ist.

Der Isolatorraum kann zum Beispiel durch Schotts von anderen Bereichen des Innenraums des Gehäuses abgeschottet werden. Die Behälter können dem Transportbereich durch die Schotts übergeben bzw. entnommen werden.

Die Anlage zum Behandeln von Behältern kann insbesondere eine Anlage zum Herstellen und/oder Befüllen von Behältern sein.

Weitere Vorteile und Wirkungen sowie Weiterbildungen der Anlage ergeben sich aus den Vorteilen und Wirkungen sowie Weiterbildungen der oben beschriebenen Vorrichtung. Zur Vermeidung von Wiederholungen wird daher in dieser Hinsicht auf die vorangegangene Beschreibung verwiesen.

Die Erfindung betrifft weiter ein Verfahren zum Behandeln von Behältern, insbesondere zum Sterilisieren von Behältern, mittels einer Vorrichtung nach der vorangegangenen Beschreibung, wobei erfindungsgemäß vorgesehen ist, dass das Verfahren zumindest die folgenden Schritte aufweist: Zuführen eines Fluids in die Kammer über die Fluideinlassöffnung mittels eines Fluidzustroms; Ausleiten des Fluids aus der Kammer über zumindest einen Teil der Fluidauslassöffnungen; Leiten des aus den Fluidauslassöffnungen austretenden Fluids zu den Behältern; und Bewegen des Fluidbegrenzungselements von der ersten Position zu der zweiten Position, um eine Behandlungsdauer der Behälter mit dem Fluid zu verringern, oder Bewegen des Fluidbegrenzungselements von der zweiten Position zu der ersten Position, um die Behandlungsdauer der Behälter mit dem Fluid zu vergrößern.

Gemäß einem Beispiel kann das Fluidbegrenzungselement zur Unterbrechung der Behandlung der Behälter in die dritte Position und damit vollständig in den Totwinkelbereich bewegt werden, wobei der Fluidzustrom vorzugsweise unverändert bleibt.

Die dritte Position kann zum Beispiel angenommen werden, wenn eine Produktionsunterbrechung stattfindet und/oder wenn eine Transportvorrichtung stillsteht und damit die zu behandelnden Behälter nicht weiter transportiert werden, um die Behandlung der Behälter zu unterbrechen.

Weiter kann das Fluid beispielsweise Sterilisationsmedium, vorzugsweise ein Gemisch aus Heißluft und Wasserstoffperoxid, aufweisen.

Gemäß einem weiteren Beispiel können die Behälter mittels einer um die Drehachse rotierenden Transportvorrichtung transportiert werden.

Weiter ist zum Beispiel denkbar, dass die Kammer über die Fluideinlassöffnung in der ersten Position und in der zweiten Position mit dem gleichen Fluidzustrom beaufschlagt wird. Damit ist gemeint, dass der Fluidzustrom durch die Fluideinlassöffnung konstant bleibt, unabhängig davon, ob das Fluidbegrenzungselement in der ersten oder zweiten Position ist. Dies kann ebenfalls für die dritte Position gelten.

Weitere Vorteile und Wirkungen sowie Weiterbildungen des Verfahrens ergeben sich aus den Vorteilen und Wirkungen sowie Weiterbildungen der oben beschriebenen Vorrichtung und der oben beschriebenen Anlage. Zur Vermeidung von Wiederholungen wird daher in dieser Hinsicht auf die vorangegangene Beschreibung verwiesen.

Im Folgenden wird die Erfindung anhand von beispielhaften Ausführungsformen mittels der beigefügten Zeichnung beschrieben. Es zeigen:
- Figur 1a, b: eine schematische Darstellung einer Vorrichtung zum Verteilen von Fluid in Behälter;
- Figur 2a, b: schematische Darstellungen verschiedener Ausführungsbeispiele eines Fluidbegrenzungselements;
- Figur 3a-d: Teildarstellungen der verschiedener Ausführungsbeispiele;
- Figur 4a-c: eine schematische Darstellung einer Anlage zum Behandeln von Behältern; und
- Figur 5: ein Flussdiagramm eines Verfahrens zum Behandeln von Behältern.

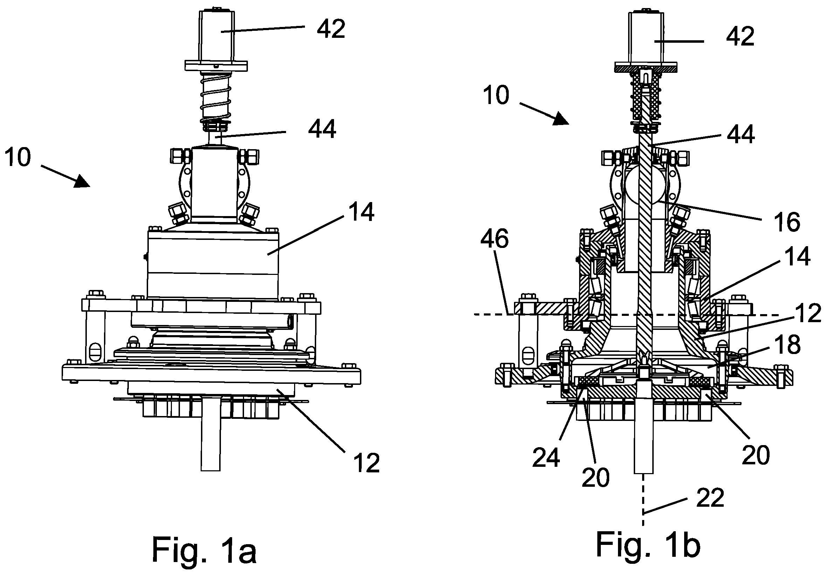

In den Figuren 1a, b wird schematisch eine Vorrichtung zum Verteilen von Fluid in Behälter dargestellt. Die Vorrichtung wird in ihrer Gesamtheit mit dem Bezugszeichen 10 bezeichnet.

Figur 1a zeigt eine Außendarstellung der Vorrichtung 10. In Figur 1b wird eine Schnittdarstellung der in Figur 1a gezeigten Vorrichtung 10 dargestellt.

Die Vorrichtung 10 weist einen Rotor 12 und einen Stator 14 auf, die eine Kammer 18 begrenzen. Der Rotor 12 ist um eine Drehachse 22 drehbar an dem Stator 14 gelagert. Weiter weist der Rotor 12 eine Vielzahl von Fluidauslassöffnungen 20 auf, die verteilt um die Drehachse 22 herum angeordnet sein können. In diesem Beispiel sind die Fluidauslassöffnungen 20 nach unten gerichtet und gleichmäßig kreisförmig um die Drehachse 22 verteilt angeordnet. In der Kammer 18 angeordnetes Fluid kann daher aufgrund der Schwerkraft durch die Fluidauslassöffnungen 20 strömen.

In einem anderen Beispiel (nicht dargestellt) können die Fluidauslassöffnungen 20 auch an einer sich um die Drehachse 22 erstreckenden Wand der Kammer 18 angeordnet sein. In diesem nicht dargestellten Beispiel erstrecken sich die Fluidauslassöffnungen 20 in Bezug zur Drehachse 22 in radialer Richtung durch die Wand der Kammer 18.

Die Kammer 18 kann mit den Fluidauslassöffnungen 20 in Fluidverbindung gebracht werden. Weiter weist der Stator 14 eine Fluideinlassöffnung 16 auf, die mit der Kammer 18 fluidverbunden ist.

Der Stator 14 kann weiter dazu ausgebildet sein, in einer Öffnung einer Gehäusedecke angeordnet zu werden. Die Gehäusedecke ist mit der gestrichelten Linie 46 angedeutet. D. h., der Stator 14 kann sich durch eine Gehäusedeckel in ein Gehäuse erstrecken. Der Rotor 12 ist in diesem Fall in dem Gehäuse angeordnet.

Die Vorrichtung 10 weist weiter ein Fluidbegrenzungselement 24 auf. Das Fluidbegrenzungselement 24 kann schwimmend in der Kammer 18 angeordnet sein. Weiter ist das Fluidbegrenzungselement 24 relativ zum Rotor 12 drehbar. Dabei kann das Fluidbegrenzungselement 24 um die Drehachse 22 drehbar sein. Dazu kann das Fluidbegrenzungselement 24 über eine Welle 44 mit einem Antrieb 42 verbunden sein, der dazu ausgebildet ist, das Fluidbegrenzungselement 24 um die Drehachse 22 zu drehen.

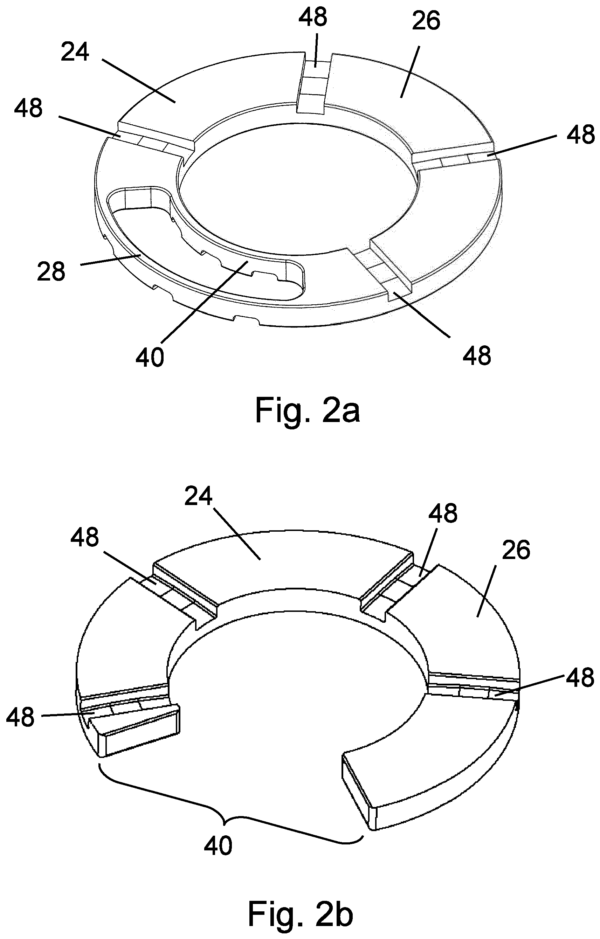

Gemäß Figur 2a kann das Fluidbegrenzungselement 24 als eine Ringscheibe aufgebaut sein. Dabei weist das Fluidbegrenzungselement 24 im Ringelement eine Durchgangsöffnung 40 auf, die als Fenster in der Ringscheibe ausgebildet sein kann. Damit sei jedoch nicht ausgeschlossen, dass das Fluidbegrenzungselement 24 auch eine andere Form annehmen kann. So kann das Fluidbegrenzungselement 24 auch als Keil ausgebildet sein, der den Überdeckungsbereich 26 bildet und sich senkrecht von der Drehachse 22 über die Fluidauslassöffnungen 20 erstreckt. Außerhalb des Keils kann dann der Auslassbereich 28 angesiedelt sein, in dem die Fluidauslassöffnungen 20 unbedeckt sind.

Weiter kann das Fluidbegrenzungselement 24 gemäß Figur 2b auch als unterbrochene Ringscheibe ausgebildet sein. Die Durchgangsöffnung 40 kann damit in diesem Beispiel die Unterbrechung in der Ringscheibe sein.

Zur Verbindung mit der Welle 44 kann das Fluidbegrenzungselement 24 mindestens eine Nut 48 aufweisen, die sich radial an dem Fluidbegrenzungselement 24 erstreckt. In die Nuten 48 können Verbindungselemente der Welle 44 eingreifen.

Das Fluidbegrenzungselement 24 kann aus einem Kunststoff, zum Beispiel PET oder PEEK hergestellt sein. Alternativ kann das Fluidbegrenzungselement 24 aus einem Metall hergestellt sein, zum Beispiel aus Stahl, Edelstahl oder beschichtetem Edelstahl. Weiter kann das Fluidbegrenzungselement 24 ein Stück hergestellt sein.

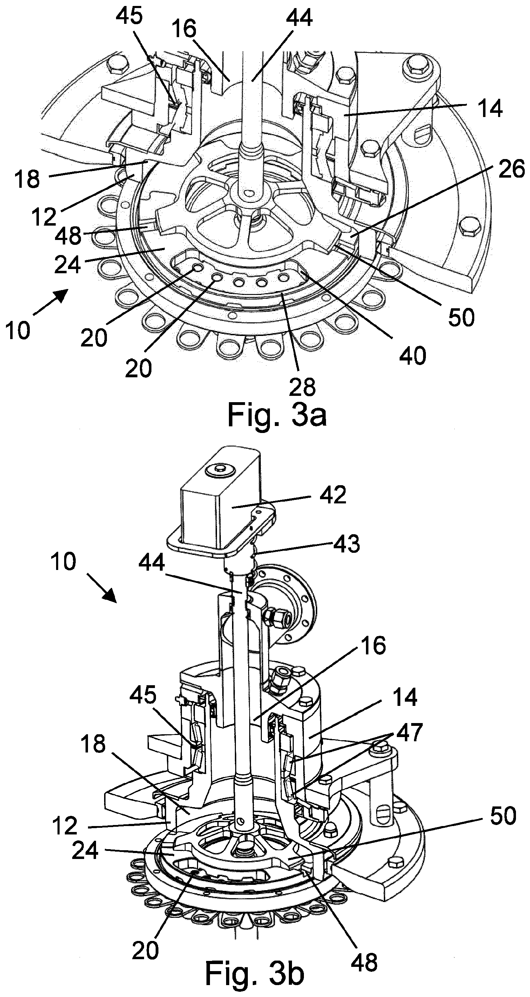

In Figur 3a und Figur 3b ist die Vorrichtung 10 in einer Ansicht dargestellt, in der eine Hälfte des Stators 14 und ein Teil des Rotors 12 ausgeblendet sind. Das Fluidbegrenzungselement 24 ist dabei derart auf dem Rotor 12 angeordnet, dass es die Fluidauslassöffnungen 20 mit Ausnahme des Bereichs, in dem die Durchgangsöffnung 40 angeordnet ist, bedeckt. Der Bereich, in dem das Fluidbegrenzungselement 24 die Fluidauslassöffnungen 20 bedeckt, wird als Überdeckungsbereich 26 bezeichnet. Die Überdeckung der Fluidauslassöffnungen 20 durch das Fluidbegrenzungselement 24 kann dichtend erfolgen. Alternativ kann trotz der Überdeckung durch das Fluidbegrenzungselement 24 eine geringe Menge Fluid von der Kammer 18 in die überdeckten Fluidauslassöffnungen 20 gelangen.

In dem Bereich der Durchgangsöffnung 40 des Fluidbegrenzungselements 24 sind die Fluidauslassöffnungen 20 freigelassen und in Fluidverbindung mit der Kammer 18. Dieser Bereich ist der Auslassbereich 28.

Da der Rotor 12 relativ zum Fluidbegrenzungselement 24 gedreht werden kann, werden die Fluidauslassöffnungen 20 abwechselnd durch den Auslassbereich 28 und den Überdeckungsbereich 26 bewegt. D. h., die Fluidauslassöffnungen 20 stehen abwechselnd in voller Fluidverbindung mit der Kammer 18 und in begrenzter bzw. keiner Fluidverbindung mit der Kammer 18. Fluid, das durch die von Fluideinlassöffnung 16 in die Kammer 18 einströmt, kann daher im Auslassbereich 28 ungehindert in die Fluidauslassöffnungen 20 eintreten. Im Überdeckungsbereich 26 begrenzt das Fluidbegrenzungselement 24 den Zustrom des Fluids in die Fluidauslassöffnungen 20.

Die Welle 44 weist eine Kopplungseinrichtung auf, die Finger 50 umfasst, die über radial von der Welle 44 abstehende Arme mit der Welle 44 verbunden sind. Die Finger 50 sind gleitend in den Nuten 48 des Fluidbegrenzungselements 24 angeordnet.

Bei einer thermischen Ausdehnung des Fluidbegrenzungselements 24, die anders als eine thermische Ausdehnung der Kopplungseinrichtung ist, kann eine relative Bewegung zwischen den Fingern 50 und den Nuten 48 stattfinden, um Spannungen zu vermeiden.

In Umfangsrichtung um die Drehachse 22 sind die Finger 50 formschlüssig mit dem Fluidbegrenzungselement 24 verbunden. Daher ist das Fluidbegrenzungselement 24 drehfest mit der Welle 44 verbunden und kann um die Drehachse 22 gedreht werden. Über die Welle 44 und den z. B. in Figur 3b dargestellten Antrieb 42 kann das Fluidbegrenzungselement 24 daher derart um die Drehachse 22 gedreht werden, dass die Durchgangsöffnung 40 in verschiedenen Winkelpositionen um die Drehachse 22 angeordnet werden kann.

Die Welle 44 kann mittels eines ersten Federelements 43, das in diesem Beispiel als Schraubenfeder ausgebildet sein kann, an das Fluidbegrenzungselement 24 gedrückt werden, das wiederum an den Boden des Rotors 12 gedrückt wird. Durch den Druck des Federelements 43 können die Finger 50 ebenfalls in die Nuten 48 des Fluidbegrenzungselements 24 gedrückt werden. Damit kann die drehfeste Verbindung zwischen dem Fluidbegrenzungselement 24 und der Welle 44 verbessert werden und das Fluidbegrenzungselement 24 sicher gehalten und betätigt werden.

Weiter kann mittels eines zweiten Federelements 45, das zum Beispiel als Wellenfeder ausgebildet sein kann, ein Lager 47 zwischen dem Rotor 12 und dem Stator 14 vorgespannt werden.

Das erste Federelement 43 und das zweite Federelement 45 können dazu ausgebildet sein, unter einer prozessbedingten thermischen Beanspruchung von 160 °C selbst nivellierend zu sein, wenn zum Beispiel ein Gemisch aus Heißluft und Sterilisationsmittel durch die Kammer 18 geleitet wird.

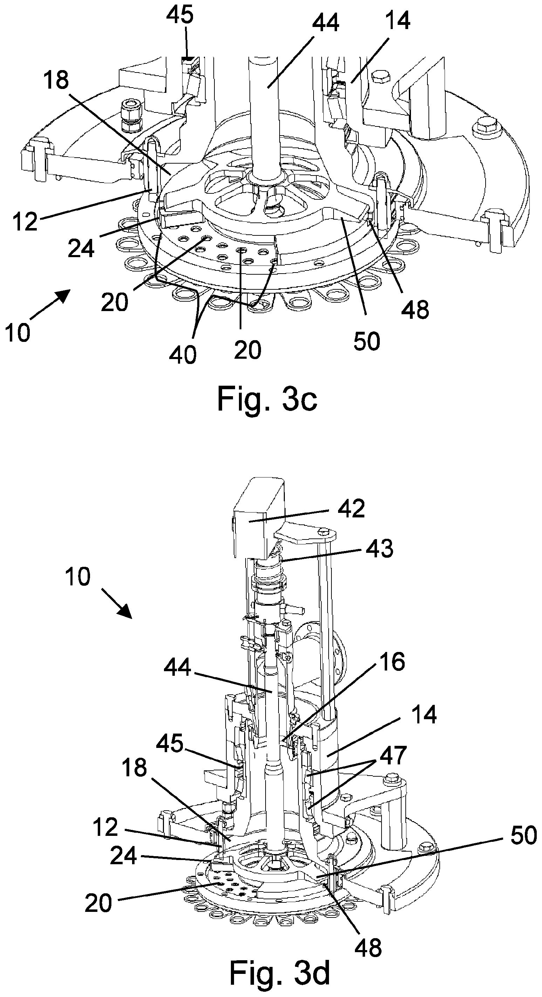

In den Figuren 3c und 3d ist die Vorrichtung mit einem Fluidbegrenzungselement 24 dargestellt, das wie in Figur 2a als unterbrochene Ringscheibe ausgebildet ist.

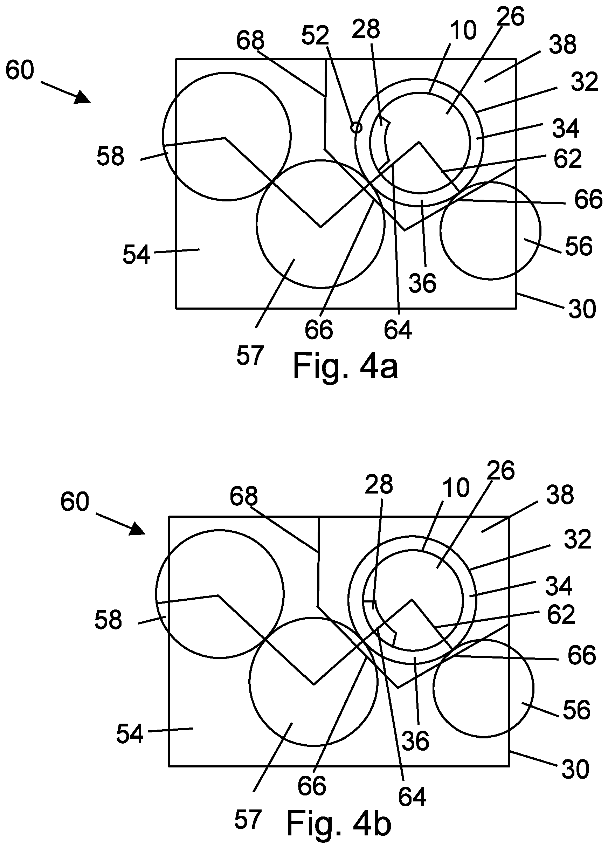

In den Figuren 4a bis 4c ist eine Anlage 60 zum Behandeln von Behältern dargestellt. Die Anlage 60 weist ein Gehäuse 30 auf, in dem die Vorrichtung 10 angeordnet sein kann. Weiter weist die Anlage 60 einen Innenraum 54 auf, in dem mehrere Transportvorrichtungen 32, 56, 57, 58 angeordnet sein können. Die Transportvorrichtungen 32, 56, 57, 58 können Behälter durch das Gehäuse 30 transportieren. Weiter können die Transportvorrichtungen 32, 56, 57, 58 als rotative Transportvorrichtungen mit Transporträdern bzw. -sternen ausgebildet sein. Die Vorrichtung 10 kann an der Transportvorrichtung 32 angeordnet sein.

Die Transportvorrichtung 32 kann eine Vielzahl von Behälteranschlüssen 52 aufweisen, wobei in Figur 4a der Übersichtlichkeit halber lediglich ein Behälteranschluss 52 dargestellt ist. Die Behälteranschlüsse 52 können über einen Umfang des Transportrads verteilt angeordnet sein und als Lanzen ausgebildet sein.

Weiter ist die Transportvorrichtung 32 in einem Isolatorraum 36 des Gehäuses 30 angeordnet, der gegenüber dem restlichen Innenraum 54 über Schotts 66 und Trennwände 68 abgegrenzt ist.

Dabei können die Fluidauslassöffnungen 20 über nicht dargestellt Leitungen mit den Behälteranschlüssen 52 fluidverbunden sein, wobei die Behälteranschlüsse 52 mit den Mündungen von Behältern fluidverbunden werden können. Fluid, dass in die Fluidauslassöffnungen 20 einströmt, kann daher über die Behälteranschlüsse 52 zum Beispiel in Behälter strömen.

Jede Transportvorrichtung 32, 56, 57, 58 kann Halteelemente aufweisen, mit denen Behälter zum Beispiel an einem Haltekragen gehalten werden können. Die Halteelemente können an einem Umfang der drehbaren Transporträder der jeweiligen Transportvorrichtung 32, 56, 57, 58 angeordnet sein. Die Behälter können weiter zwischen den Transportvorrichtungen 32, 56, 57, 58 übergeben werden.

In diesem Beispiel ist vorgesehen, dass die Transportvorrichtung 32 sich in der Ansicht nach Figur 4a-c gegen den Uhrzeigersinn dreht. An einer Übernahmeposition 62 werden dabei Behälter von der Transportvorrichtung 56 an die Transportvorrichtung 32 übergeben. Die Behälter werden von der Transportvorrichtung 32 dann über den Transportbereich 34 zu einer Abgabeposition 64 transportiert, an der sie der Transportvorrichtung 57 übergeben werden. Die Transportvorrichtung 57 transportiert die Behälter weiter und übergibt sie dann an die Transportvorrichtung 58.

Auf dem Weg zwischen der Abgabeposition 64 und der Übernahmeposition 62 durchqueren die Fluidauslassöffnungen nach der Übergabe der Behälter an die Transportvorrichtung 57 den Totwinkelbereich 36, in dem die Behälteranschlüsse 52 nicht mit Behältern verbunden sind. Im Totwinkelbereich 56 sind die Fluidauslassöffnungen 20 und die Behälteranschlüsse 52 mit dem Isolatorraum 38 fluidverbunden.

In der in Figur 4a dargestellten Ansicht der Anlage 60 ist das Fluidbegrenzungselement 24 in der ersten Position dargestellt, in der der Auslassbereich 28 vollständig innerhalb des Transportbereichs 34 angeordnet ist. Die Erstreckungslänge des Auslassbereichs 28 in Umfangsrichtung und die Geschwindigkeit, mit der der Rotor 12 mit den Fluidauslassöffnungen 20 rotiert, bestimmt die Dauer, in der die Fluidauslassöffnungen 20 im Auslassbereich 28 angeordnet sind. Diese Dauer ist identisch mit der Zeit, in der Fluid durch die Fluidauslassöffnungen 20 in die mit den Behälteranschlüssen 52 verbundenen Behälter einfließen kann.

In Figur 4b ist die zweite Position dargestellt, in der das Fluidbegrenzungselement 24 derart angeordnet ist, dass der Auslassbereich 28 teilweise in dem Totwinkelbereich 36 angeordnet ist. D. h., der Auslassbereich 28 ist ebenso teilweise im Transportbereich 32 angeordnet. Die Behandlungsdauer der Behälter ergibt sich in diesem Beispiel aus der Erstreckungslänge des in dem Transportbereichs angeordneten Teils des Auslassbereichs 28 und der Geschwindigkeit, mit der der Rotor 12 mit den Fluidauslassöffnungen 20 rotiert.

Ausgehend davon, dass in dem Beispiel nach Figur 4a und im Beispiel nach Figur 4b die Geschwindigkeit des Rotors 12 gleich ist, ergibt sich in Figur 4b eine kürzere Behandlungsdauer als in Figur 4a.

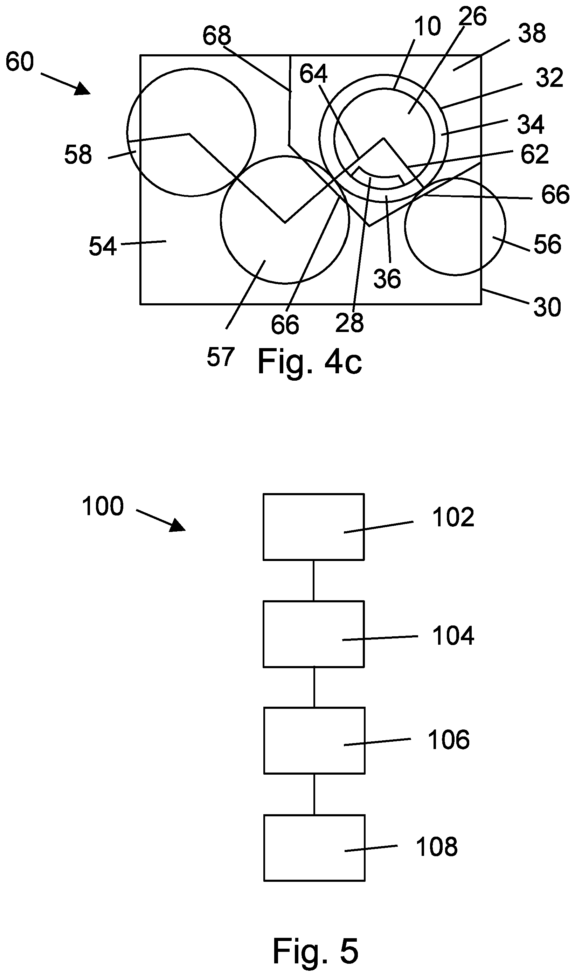

Figur 4c zeigt das Fluidbegrenzungselement 24 in der dritten Position, in der der Auslassbereich 28 vollständig im Totwinkelbereich 36 angeordnet ist. In dieser Position ist daher die Fluideinlassöffnung für 16 über die Kammer 18, die Fluidauslassöffnungen 20 und die Behälteranschlüsse 52 mit dem Isolatorraum 38 ohne Begrenzung des Fluidzustroms fluidverbunden. Im gesamten Transportbereich 32 bedeckt das Fluidbegrenzungselement 28 die Fluidauslassöffnungen 20, sodass keine Behandlung der Behälter erfolgt. Selbst wenn eine geringe Menge Fluid an dem Fluidbegrenzungselement 24 vorbei in die Behälter gelangt, reicht dies nicht für eine Behandlung der Behälter aus.

Im Vergleich zu der ersten Position kann in der zweiten und dritten Position der Fluidzustrom durch die Fluideinlassöffnung 16 unverändert sein. Eine Regelung des Fluidzustroms ist daher nicht notwendig.

Wenn das Fluid als Sterilisationsmedium ausgebildet ist, kann in der dritten Position die Zufuhr von zum Beispiel Wasserstoffperoxid gestoppt werden, sodass das Fluid dann lediglich Heißluft aufweist.

Es sei angemerkt, dass das Fluidbegrenzungselement 24 in jeder Winkelposition gedreht werden kann und nicht auf die in den Figuren 4a, 4b und 4c dargestellten Position beschränkt ist.

In den oben beschriebenen Beispielen wird der Auslassbereich 28 in seiner Gesamtheit in Umfangsrichtung die Drehachse bewegt. Es sei damit jedoch nicht ausgeschlossen, dass der Auslassbereich 28 in Umfangsrichtung vergrößert oder verkleinert werden kann.

Figur 5 zeigt ein Flussdiagramm des Verfahrens 100 zum Behandeln von Behältern. Das Verfahren 100 ist insbesondere zum Sterilisieren von Behältern ausgebildet. D. h., dass die Behandlung der Behälter eine Sterilisation umfasst. Dazu kann zum Beispiel ein Fluid durch die Fluideinlassöffnung 16 eingeführt werden, das Sterilisationsmedium umfasst. Das Sterilisationsmedium kann zum Beispiel ein Gemisch aus Heißluft und Wasserstoffperoxid aufweisen.

Das Verfahren 100 kann mit einer Vorrichtung 10 nach der oben angeführten Beschreibung durchgeführt werden. Dazu können zum Beispiel mit einer Transportvorrichtung 34 um die Drehachse 22 transportiert werden.

In einem Schritt 102 mit Fluid in die Kammer 18 über die Fluideinlassöffnung 16 zugeführt. Dabei wird ein Fluidzustrom in die Kammer 18 eingeleitet.

In einem Schritt 104 wird das Fluid aus der Kammer 18 ausgeleitet. Dies erfolgt über zumindest einen Teil der Fluidauslassöffnungen 20. Wenn das Fluidbegrenzungselement 24 in der ersten Position ist, erfolgt das Ausleiten des Fluids über alle Fluidauslassöffnungen 20, die sich im Auslassbereich 28 befinden. Wenn das Fluidbegrenzungselement 24 in der zweiten Position ist, kann das Ausleiten des Fluids über den Teil der Fluidauslassöffnungen 20 erfolgen, die sich im Auslassbereich 28 befinden.

In einem weiteren Schritt wird das aus den Fluidauslassöffnungen 20 austretende Fluid zu den Behältern geleitet. Wenn das Fluid ein Sterilisationsmedium ist, erfolgt damit die Sterilisation, d. h. die Behandlung, der Behälter.

Zum Ändern der Behandlungsdauer der Behälter, kann das Fluidbegrenzungselement 24 in einem weiteren Schritt 108 von der ersten Position zu der zweiten Position oder von der zweiten Position in die erste Position bewegt werden. Bei der Bewegung des Fluidbegrenzungselements 24 von der ersten Position zu der zweiten Position wird die Behandlungsdauer verringert. Bei einer Bewegung des Fluidbegrenzungselements 24 von der zweiten Position zu der ersten Position wird die Behandlungsdauer der Behälter vergrößert.

Weiter kann das Fluidbegrenzungselement 24 auch in die dritte Position bewegt werden, um die Behandlung der Behälter zu stoppen, beispielsweise bei einer Produktionsunterbrechung in der Anlage 60 und/oder einem Stillstand der zuvor genannten Transportvorrichtungen. Der Fluidzustrom durch die Fluideinlassöffnung 16 kann dabei konstant bleiben.

Wenn die Behandlung der Behälter nach der Unterbrechung wieder aufgenommen werden soll, kann das Fluidbegrenzungselement aus der dritten Position wieder in die zweite Position oder die erste Position bewegt werden.

### Bezugszeichenliste

| | | | |
|---|---|---|---|
| 10 | Vorrichtung zum Verteilen von Fluid in Behälter | 43 | Federelement |
| | | 44 | Welle |
| 12 | Rotor | 45 | Federelement |
| 14 | Stator | 46 | Linie |
| 16 | Fluideinlassöffnung | 47 | Lager |
| 18 | Kammer | 48 | Nut |
| 20 | Fluidauslassöffnung | 50 | Finger |
| 22 | Drehachse | 52 | Behälteranschluss |
| 24 | Fluidbegrenzungselement | 54 | Innenraum |
| 26 | Überdeckungsbereich | 56 | Transportvorrichtung |
| 28 | Auslassbereich | 57 | Transportvorrichtung |
| 30 | Gehäuse | 58 | Transportvorrichtung |
| 32 | Transportvorrichtung | 60 | Anlage zum Behandeln von Behältern |
| 34 | Transportbereich | | |
| 36 | Totwinkelbereich | 62 | Übernahmeposition |
| 38 | Isolatorraum | 64 | Abgabeposition |
| 40 | Durchgangsöffnung | 66 | Schott |
| 42 | Antrieb | 68 | Trennwand |

## Patentansprüche

1. Vorrichtung (10) zum Verteilen von Fluid in Behälter, umfassend einen Rotor (12), ein Fluidbegrenzungselement (24) und einen Stator (14) mit mindestens einer Fluideinlassöffnung (16), wobei der Stator (14) und der Rotor (12) eine mit der mindestens einen Fluideinlassöffnung (16) fluidverbundene Kammer (18) begrenzen, wobei der Rotor (12) eine Vielzahl von Fluidauslassöffnungen (20) zum Verteilen von Fluid in Behälter aufweist und mit den Fluidauslassöffnungen (20) um eine Drehachse (22) und relativ zum Fluidbegrenzungselement (24) drehbar gelagert ist, wobei die Fluidauslassöffnungen (20) ausgebildet sind, durch die Drehung um die Drehachse (22) abwechselnd einen Transportbereich (34), in dem die Fluidauslassöffnungen (20) mit Behältern fluidverbunden sind, und einen Totwinkelbereich (36), in dem die Fluidauslassöffnungen (20) mit einem Umgebungsbereich der Vorrichtung (10) fluidverbunden sind, zu durchlaufen, wobei das Fluidbegrenzungselement (24) in der Kammer (18) angeordnet ist und die Fluidauslassöffnungen (20) in einem Überdeckungsbereich (26) zumindest teilweise bedeckt und die Fluidauslassöffnungen (20) in einem Auslassbereich (28), der sich in Umfangsrichtung zumindest teilweise um die Drehachse (22) erstreckt, freilässt, wobei die Kammer (18) zumindest im Auslassbereich (28) mit den Fluidauslassöffnungen (20) fluidverbunden ist, wobei das Fluidbegrenzungselement (24) zumindest zwischen einer ersten Position und einer zweiten Position beweglich angeordnet ist, wobei der Auslassbereich (28) in der ersten Position vollständig innerhalb des Transportbereichs (34) angeordnet ist und in der zweiten Position teilweise in dem Totwinkelbereich (36) angeordnet ist, **dadurch gekennzeichnet, dass** die Vorrichtung (10) einen Antrieb (42) außerhalb der Kammer (18) aufweist, der mit einer Welle (44), die sich durch die Fluideinlassöffnung (16) erstreckt, mit dem Fluidbegrenzungselement (24) drehfest gekoppelt ist.

2. Vorrichtung (10) nach Anspruch 1, **dadurch gekennzeichnet, dass** das Fluidbegrenzungselement (24) zum Verschieben des gesamten Auslassbereichs (28) in Umfangsrichtung um die Drehachse (22) ausgebildet ist.

3. Vorrichtung (10) nach Anspruch 1 oder 2, **dadurch gekennzeichnet, dass** das Fluidbegrenzungselement (24) scheibenförmig und der Rotor (12) als drehbarer Boden der Kammer (18) ausgebildet sind, wobei das Fluidbegrenzungselement (24) eine Durchgangsöffnung (40) aufweist, der den Auslassbereich (28) freilässt.

4. Vorrichtung (10) nach einem der vorangegangenen Ansprüche, **dadurch gekennzeichnet, dass** das Fluidbegrenzungselement (24) um die Drehachse (22) drehbar ist.

5. Vorrichtung (10) nach einem der vorangegangenen Ansprüche, **dadurch gekennzeichnet, dass** das Fluidbegrenzungselement (24) schwimmend in der Kammer (18) gelagert ist.

6. Vorrichtung (10) nach einem der vorangegangenen Ansprüche, **dadurch gekennzeichnet, dass** die Vorrichtung (10) mindestens ein Federelement (43, 45) zum Vorspannen des Fluidbegrenzungselements (24) gegen den Rotor (12) aufweist, wobei das Federelement (43, 45), vorzugsweise unter einer thermischen Beanspruchung von 160 °C, selbstnivellierend ist.

7. Anlage oder Anlagenteil zum Behandeln von Behältern mit einem Fluid, umfassend mindestens eine Vorrichtung (10) nach einem der vorangegangenen Ansprüche und mindestens ein Gehäuse (30), das einen Innenraum (54) umgibt, wobei zumindest der Rotor (12) in dem Innenraum (54) angeordnet ist.

8. Anlage oder Anlagenteil nach Anspruch 7, **dadurch gekennzeichnet, dass** die Fluidauslassöffnungen (20) jeweils über mindestens eine außerhalb des Rotors (12) angeordnete Leitung mit mindestens einem Behälteranschluss (52) zum Verbinden mit einer Mündung eines Behälters fluidverbunden sind.

9. Anlage oder Anlagenteil nach Anspruch 8, **dadurch gekennzeichnet, dass** der Innenraum (54) einen Isolatorraum (38) aufweist, in dem der mindestens eine Behälteranschluss (52) angeordnet ist.

10. Verfahren (100) zum Behandeln von Behältern, insbesondere zum Sterilisieren von Behältern, mittels einer Vorrichtung (10) nach einem der Ansprüche 1 bis 6, **dadurch gekennzeichnet, dass** das Verfahren (100) zumindest die folgenden Schritte aufweist:
- Zuführen (102) eines Fluids in die Kammer (18) über die Fluideinlassöffnung (16) mittels eines Fluidzustroms;
- Ausleiten (104) des Fluids aus der Kammer (18) über zumindest einen Teil der Fluidauslassöffnungen (20);
- Leiten (106) des aus den Fluidauslassöffnungen (20) austretenden Fluids zu den Behältern; und
- Bewegen (108) des Fluidbegrenzungselements (24) von der ersten Position zu der zweiten Position, um eine Behandlungsdauer der Behälter mit dem Fluid zu verringern, oder Bewegen des Fluidbegrenzungselements (24) von der zweiten Position zu der ersten Position, um die Behandlungsdauer der Behälter mit dem Fluid zu vergrößern.

11. Verfahren nach Anspruch 10, **dadurch gekennzeichnet, dass** das Fluidbegrenzungselement (24) bei einer Unterbrechung der Behandlung der Behälter vollständig in den Totwinkelbereich (36) bewegt wird, wobei der Fluidzustrom vorzugsweise unverändert bleibt.

12. Verfahren nach Anspruch 10 oder 11, **dadurch gekennzeichnet, dass** das Fluid Sterilisationsmedium, vorzugsweise ein Gemisch aus Heißluft und Wasserstoffperoxid, aufweist.

13. Verfahren nach einem der Ansprüche 10 bis 12, **dadurch gekennzeichnet, dass** die Behälter mittels einer um die Drehachse (22) rotierenden Transportvorrichtung (34) transportiert werden.

14. Verfahren nach einem der Ansprüche 10 bis 13, **dadurch gekennzeichnet, dass** die Kammer (18) über die Fluideinlassöffnung (16) in der ersten Position und in der zweiten Position mit dem gleichen Fluidzustrom beaufschlagt wird.

## Claims

1. Device (10) for distributing fluid into containers, comprising a rotor (12), a fluid limiting element (24) and a stator (14) with at least one fluid inlet opening (16), wherein the stator (14) and the rotor (12) limit a chamber (18) that is in fluid connection with the at least one fluid inlet opening (16), wherein the rotor (12) has a plurality of fluid outlet openings (20) for distributing fluid into containers and is rotatably mounted with the fluid outlet openings (20) about a rotation axis (22) and relative to the fluid limiting element (24), wherein the fluid outlet openings (20) are configured, through rotation about the rotation axis (22), to alternately pass through a transport region (34) in which the fluid outlet openings (20) are in fluid connection with containers, and a dead angle region (36) in which the fluid outlet openings (20) are in fluid connection with a region surrounding the device (10), wherein the fluid limiting element (24) is arranged in the chamber (18) and at least partially covers the fluid outlet openings (20) in an overlap region (26) and leaves the fluid outlet openings (20) free in an outlet region (28) which extends in the circumferential direction at least partially about the rotation axis (22), the chamber (18) being in fluid connection with the fluid outlet openings (20) at least in the outlet region (28), wherein the fluid limiting element (24) is movably arranged at least between a first position and a second position, the outlet region (28) being arranged entirely within the transport region (34) in the first position and being arranged partially in the dead angle region (36) in the second position, **characterised in that**
the device (10) has a drive (42) outside the chamber (18),
which is non-rotatably coupled to the fluid limiting element (24) by means of a shaft (44) extending through the fluid inlet opening (16).

2. Device (10) according to claim 1, **characterised in that** the fluid limiting element (24) is configured to displace the entire outlet region (28) in the circumferential direction about the rotation axis (22).

3. Device (10) according to claim 1 or 2, **characterised in that** the fluid limiting element (24) is disc-shaped and the rotor (12) is configured as a rotatable floor of the chamber (18), the fluid limiting element (24) having a through-opening (40) which leaves the outlet region (28) free.

4. Device (10) according to any of the preceding claims, **characterised in that** the fluid limiting element (24) is rotatable about the rotation axis (22).

5. Device (10) according to any of the preceding claims, **characterised in that** the fluid limiting element (24) is mounted so as to float in the chamber (18).

6. Device (10) according to any of the preceding claims, **characterised in that** the device (10) has at least one spring element (43, 45) for pre-tensioning the fluid limiting element (24) against the rotor (12), the spring element (43, 45) being self-levelling, preferably under a thermal stress of 160°C.

7. System or part of a system for treating containers with a fluid, comprising at least one device (10) according to any of the preceding claims and at least one housing (30) which surrounds an interior space (54), wherein at least the rotor (12) is arranged in the interior space (54).

8. System or part of a system according to claim 7, **characterised in that** the fluid outlet openings (20) are each in fluid connection, via at least one pipe arranged outside the rotor (12), with at least one container connection (52) for connection to a mouth of a container.

9. System or part of a system according to claim 8, **characterised in that** the interior space (54) has an isolator space (38) in which the at least one container connection (52) is arranged.

10. Method (100) for treating containers, in particular for sterilising containers, by means of a device (10) according to any of claims 1 to 6, **characterised in that** the method (100) comprises at least the following steps:
Supplying (102) a fluid into the chamber (18) via the fluid inlet opening (16) by means of a fluid inflow,
Discharging (104) the fluid from the chamber (18) via at least part of the fluid outlet openings (20),
Directing (106) the fluid exiting the fluid outlet openings (20) to the containers, and
Moving (108) the fluid limiting element (24) from the first position to the second position in order to reduce a treatment time for treating the containers with the fluid, or moving the fluid limiting element (24) from the second position to the first position in order to increase the treatment time for treating the containers with the fluid.

11. Method according to claim 10, **characterised in that** the fluid limiting element (24) is moved entirely into the dead angle region (36) if the treatment of the containers is interrupted, the fluid inflow preferably remaining unchanged.

12. Method according to claim 10 or 11, **characterised in that** the fluid comprises a sterilisation medium, preferably a mixture of hot air and hydrogen peroxide.

13. Method according to any of claims 10 to 12, **characterised in that** the containers are transported by means of a transport device (34) rotating about the rotation axis (22).

14. Method according to any of claims 10 to 13, **characterised in that** the chamber (18) is supplied with the same fluid flow via the fluid inlet opening (16) in the first position and in the second position.

## Revendications

1. Dispositif (10) de distribution de fluide dans des récipients, comprenant un rotor (12), un élément de limitation de fluide (24) et un stator (14) comportant au moins un orifice d'entrée de fluide (16), dans lequel le stator (14) et le rotor (12) délimitent une chambre (18) reliée en fluide à l'au moins un orifice d'entrée de fluide (16), dans lequel le rotor (12) présente une pluralité d'orifices de sortie de fluide (20) pour distribuer du fluide dans des récipients et est logé de manière rotative avec les orifices de sortie de fluide (20) autour d'un axe de rotation (22) et par rapport à l'élément de limitation de fluide (24), dans lequel les orifices de sortie de fluide (20) sont formés afin de passer par la rotation alternativement autour de l'axe de rotation (22), d'une zone de transport (34), dans laquelle les orifices de sortie de fluide (20) sont reliés en fluide à des récipients, et une zone d'angle mort (36), dans laquelle les orifices de sortie de fluide (20) sont reliés en fluide à une zone environnante du dispositif (10), dans lequel l'élément de limitation de fluide (24) est agencé dans la chambre (18) et recouvre au moins partiellement les orifices de sortie de fluide (20) dans une zone de recouvrement (26) et dégage les orifices de sortie de fluide (20) dans une zone de sortie (28) qui s'étend au moins partiellement dans la direction circonférentielle autour de l'axe de rotation (22), dans lequel la chambre (18) est reliée en fluide aux orifices de sortie de fluide (20) au moins dans la zone de sortie (28), dans lequel l'élément de limitation de fluide (24) est disposé de manière mobile au moins entre une première position et une seconde position, dans lequel la zone de sortie (28) est agencée dans la première position entièrement à l'intérieur de la zone de transport (34) et est agencée dans la seconde position partiellement dans la zone d'angle mort (36), **caractérisé en ce que**
le dispositif (10) présente un entraînement (42) à l'extérieur de la chambre (18) qui est couplé de manière solidaire en rotation avec l'élément de limitation de fluide (24) par un arbre (44) qui s'étend à travers l'orifice d'entrée de fluide (16).

2. Dispositif (10) selon la revendication 1, **caractérisé en ce que** l'élément de limitation de fluide (24) est conçu pour déplacer l'ensemble de la zone de sortie (28) dans la direction circonférentielle autour de l'axe de rotation (22).

3. Dispositif (10) selon la revendication 1 ou 2, **caractérisé en ce que** l'élément de limitation de fluide (24) est réalisé en forme de disque et le rotor (12) en tant que fond rotatif de la chambre (18), dans lequel l'élément de limitation de fluide (24) présente une ouverture de passage (40) qui laisse libre la zone de sortie (28).

4. Dispositif (10) selon l'une quelconque des revendications précédentes, **caractérisé en ce que** l'élément de limitation de fluide (24) est rotatif autour de l'axe de rotation (22).

5. Dispositif (10) selon l'une quelconque des revendications précédentes, **caractérisé en ce que** l'élément de limitation de fluide (24) est logé de manière flottante dans la chambre (18).

6. Dispositif (10) selon l'une quelconque des revendications précédentes, **caractérisé en ce que** le dispositif (10) présente au moins un élément à ressort (43, 45) pour la précontrainte de l'élément de limitation de fluide (24) contre le rotor (12), dans lequel l'élément à ressort (43, 45), de préférence sous une contrainte thermique de 160 °C, est autonivelant.

7. Installation ou partie d'installation de traitement de récipients avec un fluide, comprenant au moins un dispositif (10) selon l'une quelconque des revendications précédentes et au moins un boîtier (30) qui entoure un intérieur (54), dans lequel au moins le rotor (12) est disposé dans l'intérieur (54).

8. Installation ou partie d'installation selon la revendication 7, **caractérisée en ce que** les orifices de sortie de fluide (20) sont respectivement reliés en fluide par le biais d'au moins une conduite disposée à l'extérieur du rotor (12) à au moins un raccord de récipient (52) pour la liaison avec une embouchure d'un récipient.

9. Installation ou partie d'installation selon la revendication 8, **caractérisée en ce que** l'intérieur (54) présente un espace d'isolation (38), dans lequel l'au moins un raccord de récipient (52) est disposé.

10. Procédé (100) de traitement de récipients, notamment de stérilisation de récipients, au moyen d'un dispositif (10) selon l'une quelconque des revendications 1 à 6, **caractérisé en ce que** le procédé (100) présente au moins les étapes suivantes :
- l'alimentation (102) d'un fluide dans la chambre (18) par le biais de l'orifice d'entrée de fluide (16) au moyen d'un flux d'alimentation en fluide ;
- l'évacuation (104) du fluide hors de la chambre (18) par le biais d'au moins une partie des orifices de sortie de fluide (20) ;
- l'acheminement (106) du fluide sortant des orifices de sortie de fluide (20) vers les récipients ; et
- le déplacement (108) de l'élément de limitation de fluide (24) de la première position à la seconde position pour réduire une durée de traitement des récipients avec le fluide, ou le déplacement de l'élément de limitation de fluide (24) de la seconde position à la première position pour augmenter la durée de traitement des récipients avec le fluide.

11. Procédé selon la revendication 10, **caractérisé en ce que** l'élément de limitation de fluide (24) est complètement déplacé dans la zone d'angle mort (36) lors d'une interruption du traitement des récipients, dans lequel le flux d'alimentation en fluide reste de préférence inchangé.

12. Procédé selon la revendication 10 ou 11, **caractérisé en ce que** le fluide présente un moyen de stérilisation, de préférence, un mélange d'air chaud et de peroxyde d'hydrogène.

13. Procédé selon l'une quelconque des revendications 10 à 12, **caractérisé en ce que** les récipients sont transportés au moyen d'un dispositif de transport (34) tournant autour de l'axe de rotation (22).

14. Procédé selon l'une quelconque des revendications 10 à 13, **caractérisé en ce que** la chambre (18) est alimentée par le même flux d'alimentation en fluide par le biais de l'orifice d'entrée de fluide (16) dans la première position et dans la seconde position.
